# EUROPEAN PATENT SPECIFICATION

(11) **EP 0 485 080 B1**
(45) Date of publication and mention of the grant of the patent: **08.06.1994**
(21) Application number: 91309526.1
(22) Date of filing: 16.10.1991
(51) Int. Cl.: E21B 17/043, F16L 15/08

(54) **Locking tube connection**
Verriegelungsverbindung für Rohre
Raccord verrouillable pour tubes

(30) Priority: 16.10.1990 GB 9022423
(43) Date of publication of application: 13.05.1992
(73) Proprietor: The Red Baron (Oil Tools Rental) Limited, Altens Aberdeen AB1 4PG (GB)
(72) Inventor: Steinkamp, Manfred, Cammachmore, Kincardineshire (GB); Lau, Werner, Aberdeen (GB)
(74) Representative: Goodenough, Nigel

(56) References cited:
- EP-A- 0 032 265
- GB-A- 1 113 517
- GB-A- 2 066 332
- GB-A- 2 202 559
- US-A- 4 693 498
- US-A- 4 903 992

## Description

The present invention relates to a locking connector between male and female components of a coupling, and more particularly to a locking connector between components of a drill string.

It is often necessary in an oil, gas or other type of well to mill the casing of the well at a depth which may be as little as 15 metres, if the casing has been damaged or become obstructed, for example. With conventional milling methods it has proved to be difficult to obtain sufficient weight on the milling tool to ensure a reasonable rate of penetration of the mill at such shallow depths. A number of ways of providing sufficient weight to achieve reasonable milling rates have been tried.

In one method, drill collars may be placed above the milling tool such that the momentum of the drill collars whilst rotating drive the mill. However, this tends to make the mill wear unevenly, and may cause it to skim a section of casing. Furthermore, the increased rigidity of the assembly above the mill prevents the assembly from conforming readily to any deviation in the path of the casing being milled, and makes the milling round a "build" section in the casing very difficult; the mill will try to track straight down the hole, and this will tend to push the mill out of the side wall of the casing being milled.

Alternative methods have been tried where the necessary additional weight in the form of drill collars has been suspended below the mill. The connections between the mill and all the items suspended below it, such as drill collars, crossovers and stabilizers, are necessarily made by means of left-handed screw connections. The result of this method was that because of the momentum of the drill collars, when the mill was slowing down as a result of the mill-chattering or striking an obstructions, the suspended assembly worked loose from the mill and caused the connections to spin off when the mill started to chatter or struck an obstruction. Attempts to lock the screw connections with a locking compound such as Bakerlok have been tried with only limited success.

An alternative approach utilised purpose-built locking rings inserted in special profiles on the connections; these rings being similar in manufacture to the Bowen Lock Ring which is used to prevent overshot top sub and bowls unscrewing when reverse rotation is applied. These rings worked well when first assembled, but due to the tight tolerances required, repeated making and breaking of the connection caused wear on the shoulders of the profiles. Furthermore, the rings could not always be easily released due to the method of locking used.

The design of the ring required a knurled surface on the face mating with the connection shoulder. A series of cams or ramps were provided around the inner mating faces. When the connection was tightened the lock rings had sufficient contact with the shoulder such that if it were not clamped to prevent motion on backing off the connection the rings slipped round and the cams forced the knurled surface to bite deeper into the shoulder, thus resisting further movement.

Every time the knurled surface moved on the collar shoulder, either when down the hole inside the well casing, of on the surface whilst making up or breaking out the connection, some material was removed form the shoulder of the profile. Very little movement is required to cause this problem, and at high rotational speeds the dynamic loads on the connections will necessarily be severe, the loads being induced by drill collar momentum.

The flywheel effect of heavy drill collars suspended below the mill and rotating at high speed stores a lot of energy. When the mill digs into the casing the drill string rapidly slows down, the momentum of the collars causes them to attempt to continue rotating, and this results in the lock rings overriding the cams or ramps and unscrewing.

Various other methods involving toothed and split locking keys proved unsuccessful during testing, and all the methods described above wherein the weight is suspended below the mill frequently result in fishing trips to recover lost assemblies which have come unscrewed, and thus any cost benefits from improving the speed of penetration are lost.

Accordingly, the present invention is intended to provide a locking device capable of resisting the momentum of the drill collars as the milling head decelerates, and thus preventing unscrewing and loss of the drill collars.

US-A-4,693,498 discloses a locking connector for connection between a male component and a female component of a coupling, said connector comprising a collet having on a first end protruding fingers which interlock with recesses in one of said components.

The present invention is characterised in that the locking connection further comprises a sleeve and a lock nut, and substantially fits over said male component on an external thread provided on the male component; said sleeve being movable and being provided with an internal thread for cooperation with the external thread whereby the sleeve is adapted to grip positively the end part of the collet on the surface of the male component; said lock nut being tightenable against the sleeve to hold the sleeve in position; and the recesses being provided on the female component.

A specific embodiment of the invention will now be described by way of example with reference to the accompanying drawings in which:
FIGURE 1 is a partially sectional view of a coupling according to the invention;
FIGURE 2 shows the male component of the coupling shown in Figure 1;
FIGURE 3 is an end view of the female component of the coupling shown in Figure 1;
FIGURE 4 shows a collet which is fitted between the male and female coupling components; and
FIGURES 5 and 6 are sectional views of parts of the collet illustrated in Figure 4.

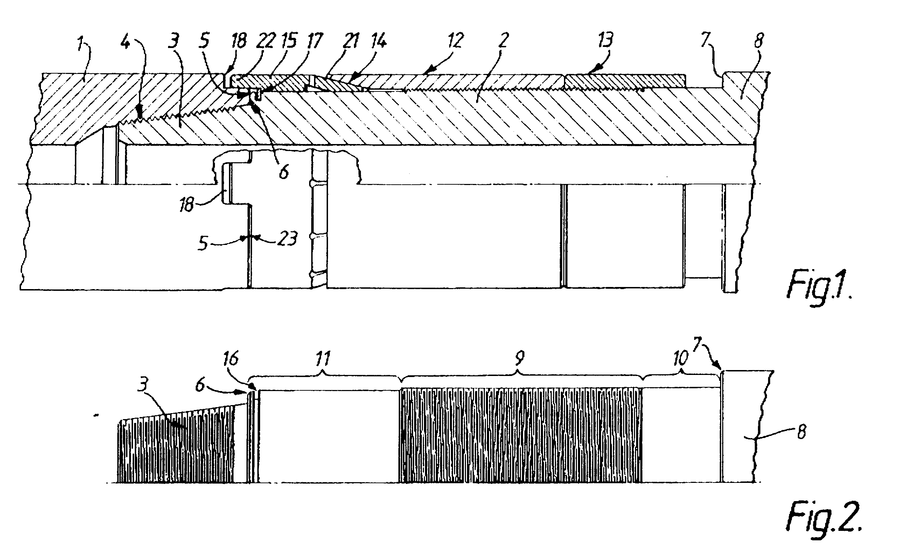

Referring first to figures 1 and 2, there is shown a locking connection between a female component 1 and a male component 2 of a coupling. The male component or shaft 2 has a tapering male screw threaded end 3 which cooperates with a compatible female screw threaded end 4 on the female receiving component 1, the female component having an annular end face 5. The threaded ends 3 and 4 of the male and female components may be screwed together such that the end face 5 of the female component abuts against a shoulder 6 on the male shaft and thus seals the connection against the engrees of internal fluid pressure. The threaded ends 3 and 4 are screwed together with a torque related to the size of the male and female components.

Another shoulder 7 on the male shaft 1 forms a section of reduced diameter with respect to the remainder 8 of the male shaft, the section of reduced diameter lying between the threaded end 3 and the remainder of the shaft, and comprising a threaded length indicated by reference numeral 9 in Figure 2, a length indicated by reference numeral 10 having the same diameter as that of the thread on threaded length 9, and a length indicated by reference numeral 11 having a diameter slightly less than the diameter of threaded length 9.

As shown in Figure 1, a sleeve 12 and a lock nut 13 are screwed on to the male shaft 2 before connection with the female component 1. The lock nut 13 may be screwed back to abut against shoulder 7, and the sleeve 12 may then be screwed back to abut against the lock nut 13 in this position. The sleeve 12 has an internally tapering diameter 14 at one end and the sleeve should be fitted on to the male part such that the taper 14 is at the end furthest away from lock nut 13.

A collet 15 is fitted on to the length 11 which has for this purpose a slightly reduced diameter compared to the threaded length 9. On length 11 and near the shoulder 6 a circumferential groove 16 is provided into which a snap ring 17 may be fitted as shown in Figure 1 to hold the collet in place on the male shaft.

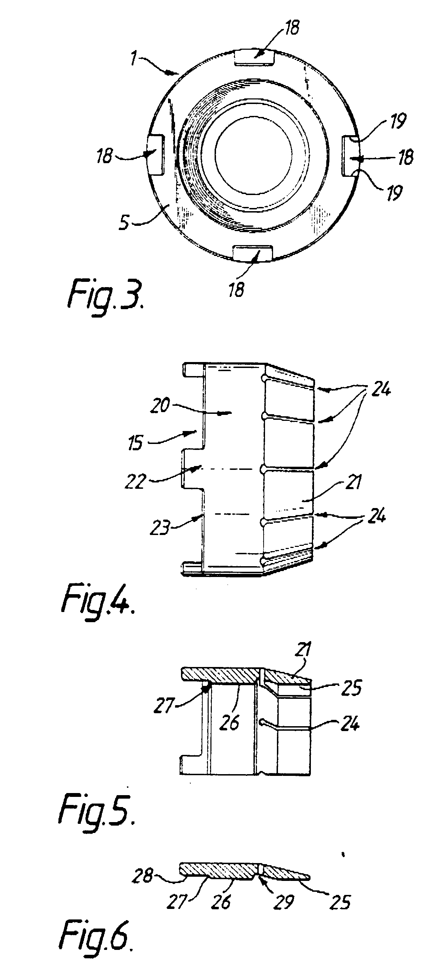

In the end of the female connection 1, as shown more clearly in Figure 3, a multiplicity of slots or recesses 18 is provided. Four recesses are shown in the illustrated embodiment, but this is only by way of example, and any number of recesses may be used the recesses 18 each have a precisely dimensioned width defined by sides 19.

As shown in Figure 4, the collet 15 comprises a substantially cylindrical part 20 and a tapered end 21. Fingers 22 protrude from the end face 23 of the cylindrical part 20 and are adapted to cooperate with recesses 18 on the female component. The tapered end 21 has a multiplicity of slots 24.

Figure 5 shows a partial axial cross section of the collet 15, and for clarity Figure 6 shows in cross section the annular wall of the collet only. The cylindrical inside diameter 25 of the tapered end 21 is serrated longitudinally. The inner face of part 20 has a section 26 with a diameter substantially the same as that of diameter 25. A shoulder 27 on the inner face of part 20′ forms a section 28 having a larger internal diameter than section 26. Between section 26 and the serrated diameter 25 a recess 29 is formed. The slots 24 and the recess 29 allow the tapered end 21 to expand or to be bent inwards to some extent.

The elements of the coupling described above are assembled to form a locking connection in the following way.

The lock nut 13 is screwed on to the male shaft 2 until it abuts with shoulder 7. The sleeve 12 is fitted on to the male shaft and screwed back until it contacts the lock nut 13, taking care that the internally tapered end 14 of the sleeve is at the opposite end of the sleeve to that which contacts the lock nut. The collet 15 is then fitted over section 11 of the male shaft with tapered end 21 of the collet adapted to correspond to internal taper 14, such that the tapered end 21 slides under taper 14 on the sleeve 12.

The snap ring 17 is fitted into groove 16 on the male shaft 2 behind the collet, and the collet is then allowed to move back such that the internal shoulder 27 of the collet bears against the snap ring 17; the collet then being restrained above the snap ring on the mile shaft. At this stage the collet fingers 22 are preferably held clear of the recesses whilst tightening the connection.

The female connection 1 is then screwed on to the male shaft 2 by means of the complementary screw threads 3 and 4 until the appropriate torque is achieved and the end face 5 of the female connection abuts and seals against shoulder 6 on the male shaft.

The fingers 22 on the collet are then allowed to engage with and slide into recesses 18 on the female connection. The recesses 18 are of sufficient depth that the fingers 22 do not foul the ends of the recesses. The widths of the recesses and of the fingers correspond very precisely.

The sleeve 12 is then screwed down on to the collet such that the taper 14 on the sleeve fits over the tapered end 21 of the collet and the shoulder 27 bears against the snap ring 17. The snap ring ensures that the end face 23 of the collet remains clear of the end face 5 and the shoulder 6 which are torqued together, and thus reduces the effect of drag on the coupling. When the sleeve 12 is screwed down on to the collet, the serrated internal surface 25 bites into the surface 11 of the male shaft. Once the predetermined torque is achieved on the sleeve 12, the collet 15 is held between the snap ring and the sleeve. The only contact between the collet and the female component is then at the sides 19 of the recesses 18.

Finally, the lock nut 13 is screwed down and torqued against sleeve 12. The lock nut has a minimal clearance on the diameter of section 10 of the male shaft in order to reduce the ingress of surrounding fluids and contaminants.

The breakout torque of the connection made up in the manner described above is thus increased, and is dependent on the size of the connections and the torques present on the assembly. The initial resistance to back-off is increased as the overall inertia in the locking connection has to be overcome.

## Claims

1. A locking connector for connection between a male component (2) and a female component (1) of a coupling, said connector comprising a collet (15) having on a first end protruding fingers (22) which interlock with recesses (18) in one of said components characterised in that the locking connection further comprises a sleeve (12) and a lock nut (13), and substantially fits over said male component (2) on thread (9) provided on the male component; said sleeve (12) being movable and being provided with an internal thread for cooperation with the external thread (9) whereby said sleeve (12) is adapted to grip positively the end part (21) of the collet (15) on the surface of the male component; said lock nut (13) being tightenable against the sleeve (12) to hold the sleeve in position; and said recesses (18) being provided on said female component (1).

2. A locking connector according to claim 1, wherein said one end of the sleeve (12) has an outwardly tapering internal diameter (14).

3. A locking connector according to claim 1 or claim 2, wherein said second end (21) of said collet tapers inwardly.

4. A locking connector according to any preceding claim, wherein said second end (21) of said collet has a multiplicity of longitudinal slots (24).

5. A locking connector according to any preceding claim, wherein the interior (25) of said second end (21) of said collet has longitudinally extending serrations.

6. A locking connector according to any preceding claim, additionally comprising a snap-in ring (17) adapted to fit in a groove (16) on said male component (2) to hold the collet (15) on the male component.

## Patentansprüche

1. Verriegelungsverbindung zur Verbindung eines Außenelementes (2) mit einem Innenelement (1) eines Kupplungsstücks, wobei die Verbindung einen Klemmring (15) umfaßt, der an einem ersten Ende vorstehende Finger (22) aufweist, die in Aussparungen (18) in einem der Elemente eingreifen, **dadurch gekennzeichnet,** daß die Verriegelungsverbindung des weiteren eine Hülse (12) und eine Klemmutter (13) umfaßt und im wesentlichen über das Außenelement (2) auf dem Gewinde (9) paßt, das an dem Außenelement vorhanden ist; wobei die Hülse (12) beweglich ist und mit einem Innengewinde versehen ist, das mit dem Außengewinde (9) zusammenwirkt, wodurch die Hülse (12) formschlüssig das Endteil (21) des Klemmrings (15) an der Oberfläche des Außenelementes hält; wobei die Klemmutter (13) an der Hülse (12) festgezogen werden kann, um die Hülse in Stellung zu halten; und wobei die Aussparungen (18) an dem Innenelement (1) vorhanden sind.

2. Verriegelungsverbindung nach Anspruch 1, wobei das eine Ende der Hülse (12) einen nach außen konisch verlaufenden Innendurchmesser (14) aufweist.

3. Verriegelungsverbindung nach Anspruch 1 oder Anspruch 2, wobei das zweite Ende (21) des Klemmrings eine Vielzahl von Längsschlitzen (24) aufweist.

4. Verriegelungsverbindung nach Anspruch 1 oder Anspruch 2, wobei das zweite Ende (21) des Klemmrings eine Vielzahl von Längsschlitzen (24) aufweist.

5. Verriegelungsverbindung nach einem der vorangehenden Ansprüche, wobei die Innenseite (25) des zweiten Endes (21) des Klemmrings längs verlaufende Einkerbungen aufweist.

6. Verriegelungsverbindung nach einem der vorangehenden Ansprüche, die des weiteren einen Schnappring (17) umfaßt, der in eine Nut (16) in dem Außenelement (2) paßt und den Klemmring (15) an dem Außenelement hält.

## Revendications

1. Connecteur de verrouillage destiné à assurer une connexion entre un composant mâle (2) et un composant femelle (1) d'un accouplement, ledit connecteur comprenant une douille (15) qui possède sur une première extrémité des doigts (22) en saillie qui viennent en verrouillage dans des évidements (18) dans l'un desdits composants, caractérisé en ce que ledit connecteur de verrouillage comprend en outre un fourreau (12) et un écrou de blocage (13), et se monte sensiblement sur ledit composant mâle (2) sur un filetage (9) prévu sur le composant mâle; ledit fourreau (12) étant mobile et étant pourvu d'un taraudage intérieur destiné à coopérer avec le filetage extérieur (9), grâce à quoi ledit fourreau (12) est adapté à accrocher positivement la partie d'extrémité (21) de la douille (15) sur la surface du composant mâle; ledit écrou de blocage (13) pouvant être serré contre le fourreau (12) afin de maintenir le fourreau en position; et lesdits évidements (18) étant prévus sur ledit composant femelle (1).

2. Connecteur de verrouillage selon la revendication 1, dans lequel ladite extrémité du fourreau (12) a un diamètre intérieur (14) qui s'évase vers l'extérieur.

3. Connecteur de verrouillage selon l'une ou l'autre des revendications 1 et 2, dans lequel ladite seconde extrémité (21) de ladite douille va en se rétrécissant vers l'intérieur.

4. Connecteur de verrouillage selon l'une quelconque des revendications précédentes, dans lequel ladite seconde extrémité (21) de ladite douille comporte une multiplicité de fentes longitudinales (24).

5. Connecteur de verrouillage selon l'une quelconque des revendications précédentes, dans lequel l'intérieur (25) de ladite seconde extrémité (21) de ladite douille comporte des ondulations qui s'étendent longitudinalement.

6. Connecteur de verrouillage selon l'une quelconque des revendications précédentes, comprenant en outre un circlips (17) adapté à s'engager dans une gorge (16) sur ledit composant mâle (2) afin de maintenir la douille (15) sur le composant mâle.
